# EUROPEAN PATENT SPECIFICATION

(11) **EP 2 053 984 B1**
(45) Date of publication and mention of the grant of the patent: **15.05.2019**
(21) Application number: 07837267.9
(22) Date of filing: 22.08.2007
(51) Int. Cl.: A61C 9/00, A61C 7/08, A61C 7/00

(54) **METHOD FOR FABRICATING ORTHODONTIC ALIGNERS**
VERFAHREN ZUR HERSTELLUNG ORTHODONTISCHER AUSRICHTER
PROCÉDÉ DE FABRICATION D'ALIGNEURS ORTHODONTIQUES

(30) Priority: 22.08.2006 US 823118 P; 21.08.2007 US 842411
(43) Date of publication of application: 06.05.2009
(73) Proprietor: Hilliard, Jack Keith, Lakeland, FL 33813 (US)
(72) Inventor: Hilliard, Jack Keith, Lakeland, FL 33813 (US)
(74) Representative: Hartz, Nikolai
(86) International application number: PCT/US2007/018673
(87) International publication number: WO 2008/024450

(56) References cited:
- US-A- 3 724 075
- US-A- 5 975 893
- US-A1- 2003 190 575
- US-B2- 7 077 646

## Description

### FIELD OF THE INVENTION

The present invention is directed to a method and system for fabricating orthodontic aligners, and more particularly to a method of fabricating orthodontic aligners from a set of successive computer-generated models.

### BACKGROUND OF THE INVENTION

Orthodontic treatments using polymeric tooth aligners have been developed in recent years for correction of maloccluded teeth. A detailed discussion of the history and evolution of such treatment methodologies is provided in U.S. Patent Application No. 7,077, 646 and U.S. Patent Application No. 6,702,575, by the present inventor.

Further, tooth positioners for finishing orthodontic treatment are described by Kesling in the Am. J. Orthod. Oral. Surg. 31:297 304 (1945) and 32:285 293 (1946). The use of silicone positioners for the comprehensive orthodontic realignment of a patient's teeth is described in Warunek et al. (1989) J. Clin. Orthod. 23:694 700. Clear plastic retainers for finishing and maintaining tooth positions are commercially available from Raintree Essix, Inc., New Orleans, La. 70125, and Tru-Tain Plastics, Rochester, Minn. 55902. The manufacture of orthodontic positioners is described in U.S. Pat. Nos. 5,186,623; 5,059,118; 5,055,039; 5,035,613; 4,856,991; 4,798,534; and 4,755,139. The use of two or more vacuum-formed appliances for effecting orthodontic treatment is suggested in Nahoum (1964) N.Y. State D.J. 30:385 390.

Other publications describing the fabrication and use of dental positioners include Kleemann and Janssen (1996) J. Clin. Orthodon. 30:673 680; Cureton (1996) J. Clin. Orthodon. 30:390 395; Chiappone (1980) J. Clin. Orthodon. 14:121 133; Shilliday (1971) Am. J. Orthodontics 59:596 599; Wells (1970) Am. J. Orthodontics 58:351 366; and Cottingham (1969) Am. J. Orthodontics 55:23 31.

Kuroda et al. (1996) Am. J. Orthodontics 110:365 369 describes a method for laser scanning a plaster dental cast to produce a digital image of the cast. See also U.S. Pat. No. 5,605,459.

U.S. Pat. Nos. 5,533,895; 5,474,448; 5,454,717; 5,447,432; 5,431,562; 5,395,238; 5,368,478; and 5,139,419, assigned to Ormco Corporation, describe methods for manipulating digital images of teeth for designing orthodontic appliances.

U.S. Pat. No. 5,011,405 describes a method for digitally imaging a tooth and determining optimum bracket positioning for orthodontic treatment. Laser scanning of a molded tooth to produce a three-dimensional model is described in U.S. Pat. No. 5,338,198. U.S. Pat. No. 5,452,219 describes a method for laser scanning a tooth model and milling a tooth mold. Digital computer manipulation of tooth contours is described in U.S. Pat. Nos. 5,607,305 and 5,587,912. Computerized digital imaging of the jaw is described in U.S. Pat. Nos. 5,342,202 and 5,340,309. Other patents of interest include U.S. Pat. Nos. 5,549,476; 5,382,164; 5,273,429; 4,936,862; 3,860,803; 3,660,900; 5,645,421; 5,055,039; 4,798,534; 4,856,991; 5,035,613; 5,059,118; 5,186,623; and 4,755,139.

To briefly summarize this process, the orthodontic treatment plan typically involves taking a stone model of a patient's malocclusion, creating a digital scan of the model, and generating a virtual model of the malocclusion as a CAD file that can be digitally manipulated by a technician working at a computer terminal to create a series of successive teeth arrangements. The virtual model may also be obtained by directly scanning the patient's mouth, or by scanning an impression of the patient's teeth. Each teeth arrangement represents an incremental movement of selected teeth in a prescribed plan for sequentially rearranging the maloccluded teeth into an ideal occlusion that is the desired end result. The technician, using the initial teeth arrangement representing the maloccluded teeth, creates each successive teeth arrangement by making selective virtual "cuts" on a CAD image of the teeth arrangement. The technician repositions the selected portions of the arrangement into the next sequential arrangement according to the treatment plan to create the next arrangement. From the repositioned arrangement, the technician creates the next arrangement, and repeats this process as required to achieve the final ideal teeth arrangement. Once the virtual models are completed in the digital medium, a corresponding series of physical patterns are created using rapid prototyping techniques. A set of successive orthodontic aligners are then thermoformed as negatives of the positive patterns by molding them over the physical patterns, typically by using a vacuum molding or "suck-down" machine.

Much emphasis has been placed on the ability to generate the aligners at one time and ship the set of aligners directly to a patient in a single package, including markings and instructions for the proper sequence and timing of using each of the aligners. Perceived as an efficient use of the orthodontist's time and resources, the patient merely follows the instructions and markings, requiring only occasional office visits for monitoring the progress of the treatment plan. U.S. Patent No. 6,554,611, and U.S. Patent No. 6,398,548, assigned to Align Technology, Inc., of Santa Clara, CA, disclose methods of implementing the treatment plans in this manner.

Other methods for treatment of malocclusions with polymeric shell aligners have also been developed in which the polymeric aligners are fabricated in a dental laboratory via rapid prototyping of the digital models, based on the prescribed treatment plan, wherein the aligners are sent in pairs to either the patient or the dentist's office. Subsequent aligners are sent in groups of one or two until the treatment plan is completed. This method is intended to assure that the aligners are applied in the proper sequence and at the proper intervals.

Whether the aligners are shipped as a complete, marked set or mailed in pairs at prescribed intervals, the aligners must be trimmed before they are sent to remove excess material from the polymeric sheets. This typically requires some manual cutting and/or a laser-cutting machine to trim away the excess while the formed aligner is still on the polymeric stereolithographic pattern. The labor costs for such manual cutting operations can be relatively expensive, and some companies that manufacture aligners have chosen to remove labor-intensive portions of manufacturing operations to foreign countries where the cost of labor is significantly lower, making them relatively inaccessible to the dental office personnel and their patients.

Further complicating the above-described methods is that once the aligners are fabricated, the stereolithographic patterns are destroyed and the material recycled for further batches of aligners. While this may be considered an efficient manufacturing method, occasionally there is a need for access to the original set of patterns, for example, to create an identical set or a portion of a set of aligners. For example, the aligners in use are removable by the patient, for comfort and sanitary reasons. Also, the aligners for aesthetic purposes are made of clear polymeric material which is nearly invisible. Thus, it is not unusual that patients, many of whom are adolescents and pre-adolescents, may lose one of their aligners and require a replacement. Under the existing fabrication methods, the dentist does not have access to the pattern, therefore a new pattern must be re-created in order to fabricate the aligner. The location of the fabrication plant may further delay the replacement time, and all of this increases the cost of replacing a lost aligner.

### SUMMARY OF THE INVENTION

The present invention is directed to a method of fabricating a successive set of patterns representing incremental stages of an orthodontic treatment plan, and then sending all or a portion of the successive patterns at the same time to the dentist. The dentist is provided with a vacuum machine for thermoforming aligners as negative impressions of the positive teeth patterns. A polymeric sheet is heated so that it is more resilient or pliable, inserted into a vacuum forming machine and sucked down over the positive pattern, forming a polymeric shell with cavities shaped to receive the teeth and resiliently bias or reposition at least some of the teeth into alignment with the aligner cavities. When the aligner is formed and while still on the stereolithographic plastic pattern, excess portions of the aligner polymeric material are trimmed using manual tools and/or a laser cutting machine.

By providing a set of successive patterns to the dentist, the manufacturer is not required to form the aligners, and the time consuming labor of trimming away excess plastic from the thermoforming plastic sheets is done in the dentist's office. Fabricating thermoplastic aligners is a very simple procedure that is routinely done in dental offices worldwide. Raintree Essix, Inc., a subsidiary of Dentsply, Inc., of York, PA, is the most well known company in the world for teaching how to fabricate thermoplastic orthodontic aligners. The patterns include a specific design on the base in order to fit to a specific design on the thermoforming machine in order to obtain the ideal position for each pattern. The ideal orientation is preferably determined by the computer when the treatment plan is implemented by the computer technician.

In one embodiment, the invention is directed to a method of fabricating orthodontic aligners. The method includes the steps of providing a aligner forming machine for forming aligners from plastic sheets; acquiring an image of a maloccluded dentition in an orthodontic treatment facility; creating an original digital model based on the acquired image; determining a final teeth arrangement representing a target teeth arrangement and based on the final teeth arrangement calculating a treatment plan for repositioning the maloccluded dentition from the initial to the final teeth arrangements; manipulating the original digital model to create at least one successive digital model of at least one successive teeth arrangements in a digital format; in an orthodontic service center, fabricating at least one successive pattern corresponding to the at least one successive digital models of successive teeth arrangements, wherein each pattern represents one of the at least one successive teeth arrangements; shipping the at least one patterns to the orthodontic treatment facility; and at the orthodontic treatment facility, fabricating at least one orthodontic aligner from the thermoformable plastic sheets as negative molds of the successive patterns.

An advantage of the present invention is that the CAD implementation and other computer work may be performed at any selected remote site, and the successive dental patterns generated at the same site or at a wholly separates site as desired.

An advantage of the present invention is that the fabrication of the aligners and all of the handwork may be done right in the dentist's office.

Other features and advantages of the present invention will be apparent from the following more detailed description of the preferred embodiment, taken in conjunction with the accompanying drawings which illustrate, by way of example, the principles of the invention.

### BRIEF DESCRIPTION OF THE DRAWINGS

Figure 1 is a flowchart showing the steps of the present invention generally.
Figure 2 is a CAD image of a patient's lower teeth and gums produced by a CAD system.
Figure 3 is a CAD image with reference lines and dimensions.

### DETAILED DESCRIPTION OF THE INVENTION

The orthodontics industry has generally focused their efforts on delivering the end product, i.e., the sequential orthodontic aligners, to the patient and/ or the dentist, in the ready-to-wear final form. As described more fully below, in the present invention, the orthodontic aligners are fabricated at the dentist's office, or alternatively, in a convenient local laboratory. The dentist will have the ability to retain the series of patterns for each patient, for example, to replace an aligner that has been lost or damaged by the patient. In addition, it will be possible for the dentist to fabricate more than one aligner on the same pattern of a series. For example, thermoplastic having two different degrees of elasticity or hardness (durometer) may be used to gradually reposition teeth starting with a softer material, i.e., greater elasticity, and gradually increasing the movement with successively harder material, i.e., lower elasticity, as the teeth progress towards the arrangement of the pattern. The lighter elasticity thermoplastic aligner would be made first, then the harder thermoplastic aligner would be made second.

In one embodiment of the method of the present invention, the complete set of patterns to treat the orthodontic case is provided to the dentist in a single shipment, i.e., at one time. The number of sequential plastic patterns represents a sequence of orthodontic aligners for implementing the orthodontic treatment plan.

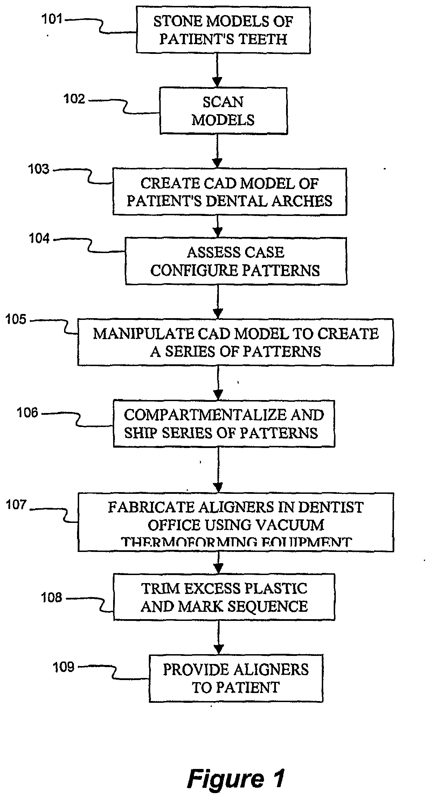

Referring to Figure 1, the method of the present invention is described as follows: Initially, an impression of at least a portion of the patient's dental anatomy - e.g., a patient's teeth, gums and soft tissue - can be taken in the orthodontist's office using alginate, PVS or other conventional dental impression materials. These impressions are then used to make conventional stone models or other physical models, at step 101. The physical models are then shipped to a dental laboratory or service center for processing. Alternatively, the impressions themselves could serve as the physical models that are shipped to the service center. In either case, the service center receives the patient's physical models and prescription form of instructions from the orthodontist and the case is logged into the service center's database. In another embodiment, the physical models may be processed in the orthodontist's office, or a dentist's office, without having to ship the physical models to a services center. For purposes of this disclosure, the term service center lab should be construed to include the orthodontist's office or dentist's office, and the two terms may be used interchangeably throughout unless otherwise indicated.

The patient's models or impressions are then subjected to a scanning process and the resulting data for the upper and lower arches is stored in digital format, at step 102, to create a CAD model of at least a portion of the patient's dental anatomy. In an alternate embodiment of the invention, the relevant portions of the patient's oral anatomy may be directly scanned to create the digital model in a format suitable for viewing and manipulation via a CAD system, without creating a model or impression.

The most frequently used means of converting an actual physical object into digital code for three-dimensional imaging, namely laser scanning, as well as other methods, first produce what is known as a "point cloud". The software will strive to rationalize the location of points known to be associated with features of the actual object with that same point located in other scans obtained while scanning the object from multiple angles. All of the points taken from multiple scans from different vantage angles will be overlapped and interpreted, allowing the software to create a complex surface represented by a cloud of perhaps a half-million individual points. Each of the points is assigned specific coordinates in three-dimensional space relative to a predetermined point of origin on the physical stone model of the patient's teeth. It should be understood that all of the points theoretically fall on the surface of the part being imaged and by viewing all of the points; a rough sort of visual image of the original part can be seen visually on a computer monitor.

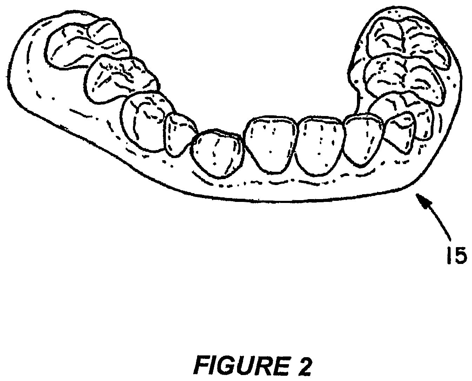

Other software available to a CAD technician can be used to further process the point cloud into what is known as a true solid model that can be later manipulated and modified using solid-modeling CAD software, at step 103. FIG. 2 is an example of the resulting CAD image 15 of the patient's teeth. However, some of the operations that a CAD technician needs to accomplish in processing an orthodontic patient's case can be performed at the initial point cloud phase.

As an alternative to steps 101 and 102 in FIG. 1, a hand-held scanning wand, such as, e.g., the Orametrix RTM system, can be used in the orthodontist's office to directly scan the patient's oral anatomy. The resulting digital data is then electronically transmitted to the orthodontic service center. Similarly, it is possible for the scanning methods described above to be directed to scanning the concave negative troughs directly from a set of dental impressions. This requires some changes to standard scanning techniques, but such a step is practical. There are clear advantages in scanning directly from the impressions, such as: a. Standard alginate impressions can dry out and shrink over the span of a few days if not carefully stored in wet paper towels. If alginate impressions are sent into a commercial orthodontic service center and have been several days in shipment, it is possible that some dimensional change can occur. Polysiloxane, a non-algenic-acid-based impression material negates these problems, but it is expensive. b. Currently, few orthodontic offices can financially justify laser scanning and imaging equipment, but it is known that scanning laser manufacturers are considering developing units specifically optimized for in-office use. Such units may be affordable and in that case, these units may become commonplace in the future. Inexpensive alginate impressions can be taken in the office and immediately scanned before shrinkage occurs. c. If in-office scanning becomes commonplace in the future, one of the advantages to be enjoyed is that scanned data can be transferred easily to a commercial orthodontic service center via the Internet. There is also currently an emergence of computer-aided tomography (CAT) scanning equipment for dentistry. This equipment is smaller than the whole-body CAT scan machines typically seen in hospitals for example and is optimized to scan the human head only. Digital orthodontics must anticipate CAT scan type methods as playing a role in the future of three-dimensional dental imaging. Like laser-scanned data, CAT data can be readily converted into three-dimensional images and like scanned data, can be sent over the Internet to an orthodontic service center for processing.

In one embodiment of the present invention, an orthodontic service center is established to implement the present invention and to manufacture successive teeth patterns on the order of a doctor for individual patients. A technician using the present system would use the set of digital tools for the purpose of fabricating sets of teeth patterns, wherein each subsequent pattern in a series repositions the teeth slightly, making progress toward predetermined, ideal positions. However, for the purposes of the present invention, the term "progressive" need not necessarily mean progressively biasing teeth of each model.

As a technician analyzes a patient's models visible on the computer monitor, the technician would see images representing a malocclusion at the beginning of treatment or partially treated occlusion. Since the models can be used to generate a true three-dimensional image of the patient's oral anatomy, the technician can dynamically rotate the dental topology for close scrutiny. The technician can sight across the virtual teeth from literally any angle or vantage point, including vantage points that would be anatomically impossible with a living patient, such as viewing from the rear of the mouth or vantage points occluded by bone and tissue.

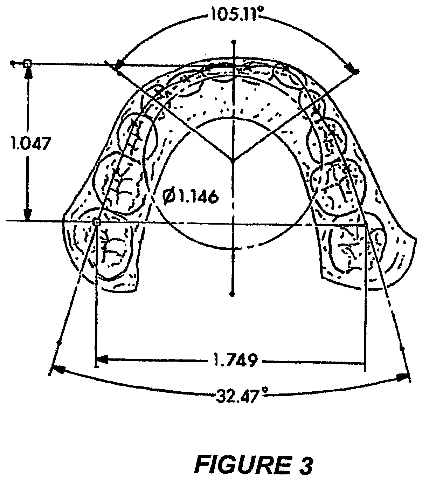

Since the model exists in a virtual three-dimensional CAD space, the technician can assess the case and take measurements to quantify various criteria for treatment, such as upper versus lower arch length, arch width, inter-canine width, arch morphology as well as degree of open/deep bight, molar relationship, over jet, curve of Spee, and symmetry. The technician can also note primary, deciduous, missing and impacted teeth, and consult statistical anatomical values, all in light of the attending doctor's instructions/prescription. For example, the CAD software can be used by the technician to sketch any number of reference lines, centerlines, and such, as shown in FIG. 3. The dentition can be interrogated just like any solid model can be dimensioned with CAD software. As depicted in FIG. 3, two-dimensional and three-dimensional splines may be strung between features of the scanned-in surfaces. The technician may zoom in and magnify particular features for examination and decision making. Any number of features may be dimensioned from technician-specified reference lines or relative to other features of the anatomy. Generally, based on this process of measuring and examination, a technician may thereafter refer to and use known statistical data of established anatomical dental norms or other norms such as typical torque, tip prominence and arch form values found in patients of the same age, sex and ethnic characteristics. All of these activities are undertaken to arrive at optimal decision-making in preparation to designing a number of aligners and aligner auxiliaries to achieve treatment objectives, at step 104.

In general, the technician manipulates the CAD model to create a progressive series of aligners with features for accommodating aligner auxiliaries at step 105, for sequential use during the patient's orthodontic treatment. The technician working with the CAD system can create multiple virtual models representing the incremental, but progressive movement of teeth between the "as scanned" occlusion and the desired final occlusion. In addition, the technician can use the CAD system to move specific teeth according to treatment objectives to desired positions as would be considered ideal at the end of a specific phase of treatment for which aligner auxiliaries are to be employed. Movements accomplished by the CAD technician can include correction of individual teeth in terms of torque, tip, prominence, rotation, bodily movement, and to a degree intrusion and extrusion.

Within the infrastructure of a commercial orthodontic service center providing services based on the present invention, a CAD technician will make a number of decisions regarding exactly how a case is to be treated based on all of the analytical tools at his or her disposal, including such pre-determined data as statistical tooth norms, along with the instructions from the attending orthodontist. For example, once the aligners have been designed and completed at a virtual level using the CAD model, the resulting modified set of models can be converted from CAD manipulatable code into code suitable for operating rapid prototyping machines that use stereo lithography methods to produce hard physical patterns. Patterns produced in this manner in turn serve as suck-down patterns for forming a series of actual aligners at step 105.

Once a series of patterns are produced, the patterns may be marked according to the sequential treatment plan. The plastic sequential patterns are preferably created in a computer-automated system, requiring minimal staffing to create and ship the patterns. The patterns would be created, moved, e.g., on a conveyer belt, to a packaging area, and placed in a compartmentalized shipping container with the appropriate mailing information. The shipping container is then shipped to the dentist, at step 106. The plastic patterns are relatively light and can be shipped at a reasonable shipping cost.

When the dentist office receives the sequential patters, the dentist or dentist's staff fabricates one or more of the aligners using the vacuum thermoforming "suck down" process, at step 107. The thermoforming equipment and supplies (thermoformable plastic sheets, in particular) are maintained in the dentist or laboratory's office, and are readily obtainable from Denstply/Raintree-Essix, Inc. It is to be understood that thermoforming aligners via the suck down process is an exemplary method of manufacturing the aligners, which is not novel. Other methods of manufacturing aligners, including positive pressure thermoforming machines, e.g., a positive pressure thermoforming machine as manufactured by Great Lakes Orthodontics Ltd. and sold under the trade name BIOSTAR™, and vacuum-positive pressure machines, are also contemplated for manufacturing the aligners within the scope of the present invention. The correct aligner may be inserted immediately in the patient's mouth, and the next several aligners provided to the patient at that time. The number of aligners provided to the patient at a time may vary, depending on the treatment plan and the dentist's preferred time between examinations, but typically there would be two or three of the aligners provided to the patient. The patient then returns to the dentist office at a predetermined interval - e.g., six to eight weeks - to be examined, at which time the patient is provided with the next several aligners in the sequence of aligners. The aligners are trimmed and preferably, sequentially numbered, at step 108. Finally, the orthodontist treats the patient using the series of aligners and aligner auxiliaries, as previously discussed, at step 109.

In another aspect of the invention, the rapid prototyping of the patterns is performed in the dentist's office as well as the fabrication. Rapid prototyping or 3D printing technology has become more widely available as the cost of 3D printers has become more affordable and the 3D printers more compact. Specialized rapid prototyping machines generate models from plastic using digital data such as CAD formats to build a model layer by layer. Layers of plastic are built up by hardening a fluid resin using laser or ultraviolet beams. In other 3D printers, a print head emits plastic particles and glue in layers to build a model of based on a CAD file. Finished models formerly were made from molds of the patient's teeth that were then used to pour stone models, and the process took several days. Similar models may now be made in a matter of several hours, and in some instances under an hour. Accordingly, the method as described above is modified to include the fabrication of the successive patterns based on the digital data.

Further, in another preferred embodiment, the method also includes the virtual orthodontic treatment planning, i.e., developing the treatment plan on a PC based computer or workstation, performed in the dental office as well. The treatment planning is performed using customized orthodontic treatment planning and CAD/CAM tooth positioning software. Using this embodiment of the invention, the dentist or orthodontist has the capability to provide aligners within a very short time frame, e.g., twenty-four to forty-eight hour turnaround time, by placing all of the steps of the process within the dentist/orthodontist office.

In addition, in an alternate embodiment of the present invention, the polymeric shells may be adapted to accommodate aligner auxiliaries that apply therapeutic forces at predetermined points on the teeth.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the scope thereof. Therefore, it is intended that the invention not be limited to the particular embodiment disclosed as the best mode contemplated for carrying out this invention, but that the invention will include all embodiments falling within the scope of the appended claims.

## Claims

1. A method of fabricating orthodontic aligners comprising:
(i) providing an aligner forming machine for forming aligners from plastic sheets;
(ii) acquiring an image (15) of a maloccluded dentition in an orthodontic treatment facility;
(iii) creating an original digital model based on the acquired image;
(iv) determining a final teeth arrangement representing a target teeth arrangement and based on the final teeth arrangement;
(v) calculating a treatment plan for repositioning the maloccluded dentition from the initial to the final teeth arrangements;
(vi) manipulating the original digital model to create at least one successive digital model of at least one successive teeth arrangements in a digital format;
(vii) in an orthodontic service center, fabricating at least one successive pattern corresponding to the at least one successive digital models of successive teeth arrangements, wherein each pattern represents one of the at least one successive teeth arrangements;
(viii) shipping the at least one patterns to the orthodontic treatment facility;
(ix) at the orthodontic treatment facility, fabricating at least one orthodontic aligner from the plastic sheets as negative molds of the successive patterns.

2. The method of claim 1, wherein the step (ii) of acquiring an image (15) includes the steps of:
(ii-a) preparing a stone model of a patient's maloccluded dentition; and
(ii-b) scanning the stone model.

3. The method of claim 2, wherein the image (15) is based on the scanned stone model.

4. The method of claim 1, wherein the step (vi) of manipulating the original digital model includes
(vi-a) creating a plurality of successive digital models of a plurality of successive teeth arrangements in a digital format, and optionally further including the steps of
(vi-b) compartmentalizing the plurality of successive patterns into a single package before shipping the patterns.

5. The method of claim 1, wherein the step (vi) of manipulating the original digital model includes
(vi-a) creating a plurality of successive digital models of a plurality of successive teeth arrangements in a digital format, and
wherein the step (vii) of fabricating includes
(vii-a) fabricating a plurality of successive patterns of the plurality of successive teeth arrangements.

6. The method of claim 1, further including the steps of compartmentalizing the at least one successive patterns into a single package before shipping the patterns.

7. The method of claim 1, wherein the step (ix) of fabricating orthodontic aligners includes:
(ix-a) fabricating a series of orthodontic aligners from the thermoformable plastic sheets as negative molds of the successive patterns in less than an entire set of the plurality of teeth patterns.

8. The method of claim 1, further including the step of
(x) trimming an excess portion of the plastic sheet from the series of orthodontic aligners.

9. The method of claim 1, wherein the steps (ii)/(iii) of acquiring an image (15) of a maloccluded dentition and creating an original digital model based on the acquired image (15) include the steps of:
(ii-1) scanning the maloccluded dentition; and
(ii-2) generating a digital model based on the scanned dentition, the digital model being represented in a format suitable for viewing and manipulation; wherein preferably the digital model produces a point cloud having a plurality of data points representing a tooth surface of a tooth in the malocclusion, and each data point of the plurality of data points is assigned specific coordinates in three-dimensional space relative to a predetermined point of origin on the physical stone model of the patient's teeth; and optionally further comprising the step of processing the point cloud into a solid model, and manipulating and modifying the solid model using solid-modeling CAD software; or
wherein the steps (ii)/(iii) of acquiring an image (15) of a maloccluded dentition and creating an original digital model based on the acquired image (15) include the steps of
(ii-5) taking an impression of at least a portion of the maloccluded dentition, and a portion of gums and soft tissue surrounding the maloccluded dentition,
(ii-6) fabricating a physical model of the at least a portion of the maloccluded dentition, and a portion of gums and soft tissue surrounding the maloccluded dentition; and optionally
(ii-7) shipping the physical model to a dental laboratory or service center for processing.

10. The method of claim 1, wherein the steps (ii)/(iii) of acquiring an image (15) of a maloccluded dentition and creating an original digital model based on the acquired image (15) include the steps of:
(ii-5) taking an impression of at least a portion of the maloccluded dentition, and a portion of gums and soft tissue surrounding the maloccluded dentition, and
(ii-7) shipping the impression as a physical model to a dental laboratory or service center for processing, and optionally
(ii-8) receiving at the dental laboratory or service center the physical model and a prescription from an orthodontist, and
(ii-9) entering a set of information associated with the patient's maloccluded dentition into a database of the dental laboratory or service center.

11. The method of claim 1, wherein the steps (ii)/(iii) of acquiring an image (15) of a maloccluded dentition and creating an original digital model based on the acquired image (15) include the steps of:
(ii-1) scanning the maloccluded dentition; and
(ii-2) generating a digital model based on the scanned dentition, the digital model being represented in a format suitable for viewing and manipulation;
wherein the step (ii-1) of scanning the dentition is performed with a hand-held scanning wand in an orthodontist's office; and the method further includes the steps of
(ii-7) electronically transmitting to the orthodontic service center the scan results for processing.

12. The method of claim 1, wherein the steps (ii)/(iii) of acquiring an image (15) of a maloccluded dentition and creating an original digital model based on the acquired image (15) include the steps of:
(ii-5) taking an impression of at least a portion of the maloccluded dentition, and a portion of gums and soft tissue surrounding the maloccluded dentition;
(ii-10) scanning the concave negative troughs directly from the impression to obtain a negative digital model of the maloccluded dentition; and
(ii-11) transmitting the negative digital model to a dental laboratory or service center for processing.

13. The method of claim 1, wherein the aligner forming machine is selected from a group consisting of a thermoforming vacuum machine, a positive pressure thermoforming machine, and vacuum-positive pressure machines; and the plastic sheets include thermoforming polymeric sheets.

## Patentansprüche

1. Verfahren zur Herstellung orthodontischer Ausrichter, umfassend:
(i) Bereitstellen einer Maschine zum Formen von Ausrichtern, um aus Kunststoffplatten Ausrichter zu formen;
(ii) Aufnehmen eines Abbildung (15) eines Malokklusionsgebisses in einer kieferorthopädischen Behandlungseinrichtung;
(iii) Erstellen eines digitalen Originalmodells auf der Grundlage der aufgenommenen Abbildung;
(iv) Bestimmung einer Endanordnung der Zähne, die eine Zielzahnanordnung repräsentiert, und auf dieser Endanordnung der Zähne basiert;
(v) Berechnen eines Behandlungsplans zur Neupositionierung des Malokklusionsgebisses von der Ursprungsanordnung bis zur Endanordnung der Zähne;
(vi) Bearbeiten des digitalen Originalmodells, um mindestens ein sukzessives digitales Modell von mindestens einer sukzessiven Zahnanordnung in einem digitalen Format zu erzeugen;
(vii) in einem kieferorthopädischen Servicecenter, Herstellen mindestens eines sukzessiven Musters, das dem mindestens einen sukzessiven digitalen Modell der sukzessiven Zahnanordnungen entspricht, wobei jedes Muster einem der mindestens einer sukzessiven Zahnanordnung entspricht;
(viii) Versenden des mindestens einem Musters zu der kieferorthopädischen Behandlungseinrichtung;
(ix) in der kieferorthopädischen Behandlungseinrichtung, Herstellen mindestens eines orthodontischen Ausrichters als Negativabdruck der sukzessiven Muster aus den Kunststoffplatten.

2. Verfahren nach Anspruch 1, wobei der Schritt (ii), des Aufnehmens einer Abbildung (15), die folgenden Schritte umfasst:
(ii-a) Anfertigen eines Steinmodells eines Malokklusionsgebisses eines Patienten; und
(ii-b) Scannen des Steinmodells.

3. Verfahren nach Anspruch 2, wobei die Abbildung (15) auf dem gescannten Steinmodell basiert.

4. Verfahren nach Anspruch 1, wobei der Schritt (vi) des Bearbeitens des digitalen Originalmodells,
(vi-a) ein Erzeugen einer Vielzahl von sukzessiven digitalen Modellen von einer Vielzahl von sukzessiven Zahnanordnungen in einem digitalen Format, und optional zusätzlich den Schritt
(vi-b) einer Kompartimentierung der Vielzahl von sukzessiven Mustern in eine einzelne Einheit, bevor die Muster versendet werden;
umfasst.

5. Verfahren nach Anspruch 1, wobei der Schritt (vi) des Bearbeitens des digitalen Originalmodells,
(vi-a) ein Erzeugen einer Vielzahl von sukzessiven digitalen Modellen von einer Vielzahl sukzessiver Zahnanordnungen in einem digitalen Format umfasst und
wobei der Schritt (vii) der Herstellung,
(vii-a) ein Herstellen einer Vielzahl sukzessiver Muster von der Vielzahl sukzessiver Zahnanordnungen,
umfasst.

6. Verfahren nach Anspruch 1, ferner umfassend den Schritt einer Kompartimentierung des mindestens einen sukzessiven Musters in eine einzelne Einheit, bevor die Muster versendet werden.

7. Verfahren nach Anspruch 1, wobei der Schritt (ix), der Herstellung eines orthodontischen Ausrichters, Folgendes umfasst:
(ix-a) ein Herstellen einer Reihe von orthodontischen Ausrichtern, als Negativabdrücke der sukzessiven Muster aus den thermoformbaren Kunststoffplatten in weniger als einem ganzen Satz der Vielzahl von Zahnmustern.

8. Verfahren nach Anspruch 1, ferner umfassend den Schritt
(x) eines Beschneidens eines überschüssigen Teils der Kunststoffplatte aus der Reihe von orthodontischen Ausrichter.

9. Verfahren nach Anspruch 1, wobei die Schritte (ii)/(iii), das Aufnehmen einer Abbildung (15) eines Malokklusionsgebisses und das Erstellen eines originalen digitalen Modells basierend auf der aufgenommenen Abbildung (15), folgende Schritte umfassen:
(ii-1) Scannen des Malokklusionsgebisses; und
(ii-2) Erzeugen eines digitalen Modells basierend auf dem gescannten Gebiss, wobei das digitale Modell in einem geeigneten Format dargestellt wird, um betrachtet und bearbeitet zu werden; wobei das digitale Modell vorzugsweise eine Punktwolke mit einer Vielzahl von Datenpunkten erzeugt, die eine Zahnoberfläche von einem Zahn in der Malokklusion darstellen, und jedem Datenpunkt, der Vielzahl von Datenpunkten, im dreidimensionalen Raum bestimmte Koordinaten relativ zu einem vorgegebenen Ursprungspunkt auf dem physischen Steinmodell der Zähne des Patienten, zugewiesen werden; und optional ferner den Schritt umfassend, ein Verarbeiten der Punktwolke in ein Volumenmodell, und ein Bearbeiten und Ändern des Volumenmodells mithilfe der CAD-Software für die Modellierung von Volumen; oder
wobei die Schritte (ii)/(iii), das Aufnehmen einer Abbildung (15) eines Malokklusionsgebisses und das Erstellen eines originalen digitalen Modells basierend auf der aufgenommenen Abbildung (15), folgende Schritte umfassen:
(ii-5) Erstellen eines Abdrucks von mindestens einem Teil des Malokklusionsgebisses, und eines Teils des Zahnfleisches und des Weichgewebes, das das Malokklusionsgebiss umgibt,
(ii-6) Herstellen eines physischen Modells des mindestens einem Teil des Malokklusionsgebisses, und eines Teils des Zahnfleisches und des Weichgewebes, das das Malokklusionsgebiss umgibt, und optional
(ii-7) Versenden des physischen Modells an ein Dentallabor oder ein Servicezentrum für Weiterverarbeitung.

10. Verfahren nach Anspruch 1, wobei die Schritte (ii)/(iii), das Aufnehmen einer Abbildung (15) eines Malokklusionsgebisses und das Erstellen eines digitalen Originalmodells basierend auf der aufgenommenen Abbildung (15) folgende Schritte umfassen:
(ii-5) Erstellen eines Abdrucks von mindestens einem Teil des Malokklusionsgebisses, und eines Teils des Zahnfleisches und des Weichgewebes, das das Malokklusionsgebiss umgibt, und
(ii-7) Versand des Abdrucks als physisches Modell an ein Dentallabor oder Servicecenter zur Weiterverarbeitung, und optional
(ii-8) Empfangen des physischen Modells und eines Rezepts von einem Kieferorthopäden im Dentallabor oder im Servicezentrum, und
(ii-9) Eingeben eines Informationssatzes über das Malokklusionsgebiss des Patienten in eine Datenbank des Dentallabors oder Servicecenters.

11. Verfahren nach Anspruch 1, wobei die Schritte (ii)/(iii), das Aufnehmen einer Abbildung (15) eines Malokklusionsgebisses und das Erstellen eines originalen digitalen Modells basierend auf dem aufgenommenen Bild (15), folgende Schritte umfassen:
(ii-1) Scannen des Malokklusionsgebisses; und
(ii-2) Erzeugen eines digitalen Modells basierend auf dem gescannten Gebiss, das digitale Modell wird in einem geeigneten Format dargestellt, um besichtigt und bearbeitet zu werden;
wobei der Schritt (ii-1) das Scannen des Gebisses mit einem tragbaren Stiftscanner in einer kieferorthopädischen Praxis durchgeführt wird; und das Verfahren umfasst ferner die Schritte
(ii-7) elektronisches Übertragen der Ergebnisse des Scans an das orthodontische Servicezentrum zur Weiterverarbeitung.

12. Verfahren nach Anspruch 1, wobei die Schritte (ii)/(iii), das Aufnehmen einer Abbildung (15) eines Malokklusionsgebisses und das Erstellen eines digitalen Originalmodells basierend auf dem aufgenommenen Bild (15), folgende Schritte umfassen:
(ii-5) Erstellen eines Abdrucks von mindestens einem Teil des Malokklusionsgebisses, und eines Teils des Zahnfleisches und des Weichgewebes, das das Malokklusionsgebiss umgibt;
(ii-10) Scannen der konkaven Negativmulden direkt von dem Abdruck, um ein digitales Negativmodell des Malokklusionsgebisses zu erhalten, und
(ii-11) Übertragen des digitalen Negativmodells an ein Dentallabor oder ein Servicezentrum zur Weiterverarbeitung.

13. Verfahren nach Anspruch 1, wobei die Maschine zum Formen von Ausrichtern ausgewählt wird aus einer Gruppe, bestehend aus einer Thermoform-Vakuummaschine, einer Überdruck-Thermoform-Maschine und einer Vakuum-Überdruck-Maschine; und die Kunststoffplatten thermoformbare polymere Platten umfassen.

## Revendications

1. Procédé de fabrication d'aligneurs orthodontiques comprenant :
(i) la fourniture d'une machine de formation d'aligneur pour la formation d'aligneurs à partir de feuilles de plastique ;
(ii) l'acquisition d'une image (15) d'une dentition présentant une malocclusion dans un établissement de traitement orthodontique ;
(iii) la création d'un modèle numérique d'origine sur la base de l'image acquise ;
(iv) la détermination d'un agencement de dents final représentant un agencement de dents cible et basé sur l'agencement de dents final ;
(v) le calcul d'un plan de traitement pour le repositionnement de la dentition présentant une malocclusion de l'agencement de dents initial à l'agencement de dents final ;
(vi) la manipulation du modèle numérique d'origine pour créer au moins un modèle numérique successif d'au moins un agencement de dents successif dans un format numérique ;
(vii) dans un centre de service orthodontique, la fabrication d'au moins une reproduction successive correspondant à l'au moins un modèle numérique successif d'agencements de dents successifs, dans lequel chaque reproduction représente un de l'au moins un agencement de dents successif ;
(viii) le transport de l'au moins une reproduction à l'établissement de traitement orthodontique ;
(ix) à l'établissement de traitement orthodontique, la fabrication d'au moins un aligneur orthodontique à partir des feuilles de plastique en tant que moules négatifs des reproductions successives.

2. Procédé selon la revendication 1, dans lequel l'étape (ii) d'acquisition d'une image (15) inclut les étapes de :
(ii-a) préparation d'un modèle minéral de la dentition d'un patient présentant une malocclusion ; et
(ii-b) balayage du modèle minéral.

3. Procédé selon la revendication 2, dans lequel l'image (15) est basée sur le modèle minéral balayé.

4. Procédé selon la revendication 1, dans lequel l'étape (vi) de manipulation du modèle numérique d'origine inclut
(vi-a) la création d'une pluralité de modèles numériques successifs d'une pluralité d'agencements de dents successifs dans un format numérique, et optionnellement incluant en outre les étapes de
(vi-b) compartimentation de la pluralité de reproductions successives en un seul paquet avant le transport des reproductions.

5. Procédé selon la revendication 1, dans lequel l'étape (vi) de manipulation du modèle numérique d'origine inclut
(vi-a) la création d'une pluralité de modèles numériques successifs d'une pluralité d'agencements de dents successifs dans un format numérique, et
dans lequel l'étape (vii) de fabrication inclut
(vii-a) la fabrication d'une pluralité de reproductions successives de la pluralité d'agencements de dents successifs.

6. Procédé selon la revendication 1, incluant en outre les étapes de compartimentation de l'au moins une reproduction successive en un seul paquet avant le transport des reproductions.

7. Procédé selon la revendication 1, dans lequel l'étape (ix) de fabrication d'aligneurs orthodontiques inclut :
(ix-a) la fabrication d'une série d'aligneurs orthodontiques à partir des feuilles de plastique thermoformable en tant que moules négatifs des reproductions successives dans moins d'un ensemble entier de la pluralité de reproductions de dents.

8. Procédé selon la revendication 1, incluant en outre l'étape de
(x) rognage d'une portion excessive de la feuille de plastique de la série d'aligneurs orthodontiques.

9. Procédé selon la revendication 1, dans lequel les étapes (ii)/(iii) d'acquisition d'une image (15) d'une dentition présentant une malocclusion et de création d'un modèle numérique d'origine sur la base de l'image acquise (15) incluent les étapes de :
(ii-1) balayage de la dentition présentant une malocclusion ; et
(ii-2) génération d'un modèle numérique sur la base de la dentition balayée, le modèle numérique étant représenté dans un format adapté à la visualisation et à la manipulation ; dans lequel de préférence le modèle numérique produit un nuage de points ayant une pluralité de points de données représentant une surface de dent d'une dent dans la malocclusion, et des coordonnées spécifiques dans l'espace tridimensionnel par rapport à un point d'origine prédéterminé sur le modèle minéral physique des dents du patient sont attribuées à chaque point de données de la pluralité de points de données ; et optionnellement comprenant en outre l'étape de traitement du nuage de points en un modèle solide, et de manipulation et de modification du modèle solide en utilisant un logiciel CAD de modélisation solide ; ou
dans lequel les étapes (ii)/(iii) d'acquisition d'une image (15) d'une dentition présentant une malocclusion et de création d'un modèle numérique d'origine sur la base de l'image acquise (15) incluent les étapes de
(ii-5) prise d'une empreinte d'au moins une portion de la dentition présentant une malocclusion, et d'une portion de gencives et tissu mou entourant la dentition présentant une malocclusion,
(ii-6) fabrication d'un modèle physique de l'au moins une portion de la dentition présentant une malocclusion, et d'une portion de gencives et tissu mou entourant la dentition présentant une malocclusion ; et optionnellement
(ii-7) transport du modèle physique à un laboratoire ou centre de service dentaire pour traitement.

10. Procédé selon la revendication 1, dans lequel les étapes (ii)/(iii) d'acquisition d'une image (15) d'une dentition présentant une malocclusion et de création d'un modèle numérique d'origine sur la base de l'image acquise (15) incluent les étapes de :
(ii-5) prise d'une empreinte d'au moins une portion de la dentition présentant une malocclusion et d'une portion de gencives et tissu mou entourant la dentition présentant une malocclusion, et
(ii-7) transport de l'empreinte en tant que modèle physique à un laboratoire ou centre de service dentaire pour traitement, et optionnellement
(ii-8) réception du modèle physique et d'une ordonnance d'un orthodontiste dans un laboratoire ou centre de service dentaire, et
(ii-9) saisie d'un ensemble d'informations associées à la dentition présentant une malocclusion du patient dans une base de données du laboratoire ou centre de service dentaire.

11. Procédé selon la revendication 1, dans lequel les étapes (ii)/(iii) d'acquisition d'une image (15) d'une dentition présentant une malocclusion et de création d'un modèle numérique d'origine sur la base de l'image acquise (15) incluent les étapes de :
(ii-1) balayage de la dentition présentant une malocclusion ; et
(ii-2) génération d'un modèle numérique sur la base de la dentition balayée, le modèle numérique étant représenté dans un format adapté à la visualisation et à la manipulation ;
dans lequel l'étape (ii-1) de balayage de la dentition est réalisée avec une baguette de balayage portable dans un cabinet d'orthodontie ; et le procédé inclut en outre les étapes de
(ii-7) transmission électronique au centre de service orthodontique des résultats de balayage pour traitement.

12. Procédé selon la revendication 1, dans lequel les étapes (ii)/(iii) d'acquisition d'une image (15) d'une dentition présentant une malocclusion et de création d'un modèle numérique d'origine sur la base de l'image acquise (15) incluent les étapes de :
(ii-5) prise d'une empreinte d'au moins une portion de la dentition présentant une malocclusion, et d'une portion de gencives et tissu mou entourant la dentition présentant une malocclusion,
(ii-10) balayage des cavités négatives concaves directement à partir de l'empreinte pour obtenir un modèle numérique négatif de la dentition présentant une malocclusion ; et
(ii-11) transmission du modèle numérique négatif à un laboratoire ou centre de service dentaire pour traitement.

13. Procédé selon la revendication 1, dans lequel la machine de formation d'aligneur est sélectionnée dans un groupe constitué d'une machine de thermoformage sous vide, une machine de thermoformage à pression positive et des machines à pression positive sous vide ; et les feuilles de plastique incluent des feuilles de polymère de thermoformage.
